# EUROPÄISCHE PATENTSCHRIFT

(11) **EP 2 722 160 B1**
(45) Veröffentlichungstag und Bekanntmachung des Hinweises auf die Patenterteilung: **14.09.2016**
(21) Anmeldenummer: 13188149.2
(22) Anmeldetag: 10.10.2013
(51) Int. Cl.: A63B 43/00, B29D 22/04

(54) **Verfahren zum Herstellen von Kunststoffbällen sowie Kunststoffball**
Method for manufacturing plastic balls and plastic ball
Procédé de fabrication de balles en plastique et balle en plastique

(30) Priorität: 16.10.2012 DE 102012218858
(43) Veröffentlichungstag der Anmeldung: 23.04.2014
(73) Patentinhaber: John GmbH, 83395 Freilassing (DE)
(72) Erfinder: John, Susanne, 83395 Freilassing (DE)
(74) Vertreter: Weickmann & Weickmann PartmbB

(56) Entgegenhaltungen:
- WO-A1-2007/026919
- DE-U1-202011 051 517
- US-A- 4 798 386
- US-A1- 2007 135 234
- US-B1- 6 299 550
- ANONYMOUS: 'TOPCOAT' WIKIPEDIA, THE FREE ENCYCLOPEDIA, [Online] 22 November 2011, XP055190419 Gefunden im Internet: <URL:http://web.archive.org/web/20111122090 840/http://en.wikipedia.org/wiki/Topcoat> [gefunden am 2015-05-20]
- ANONYMOUS: 'PAINT' WIKIPEDIA, THE FREE ENCYCLOPEDIA, [Online] 29 August 2012, XP055190421 Gefunden im Internet: <URL:http://web.archive.org/web/20120829030 334/http://en.wikipedia.org/wiki/Paint> [gefunden am 2015-05-20]
- ANONYMOUS: 'JAZZ TM COLORS Available Colors: STANDARD DAY-GLO TM COLORS PANTONE TM ** COLORS JZB-11B Aurora Pink* (Blue Shade) JZB-801 PANTONE 801 Blue** JZB-11Y Aurora Pink* (Yellow Shade) JZB-802 PANTONE 802 Green** JZB-13 Rocket Red* JZB-803 PANTONE 803 Yellow** JZB-14 Fire Orange* JZB-804 PANTONE 804 Orange', [Online] 22 Januar 2012, Seite 3PP, XP055214992 Gefunden im Internet: <URL:https://web.archive.org/web/2015092114 5201/http://www.dayglo.com/fileshare/tech/J AZZ.pdf> [gefunden am 2015-09-21] & "Jazz Colors (JZB) Fluorescent Bases for UV / EB Inks", DayGlo , 22 January 2012 (2012-01-22), Retrieved from the Internet: URL:https://web.archive.org/web/2012012214 3113/http://www.dayglo.com/world-of-color/ technical-bulletins/inks-and-bases [retrieved on 2015-09-21]

## Beschreibung

Die vorliegende Erfindung betrifft ein Verfahren zum Herstellen von Kunststoffbällen gemäß dem Oberbegriff des Anspruchs 1, sowie einen Kunststoffball.

Bälle dieser Art werden bisher in der Regel aus flüssigem Plastisol hergestellt, welches in Rotationsformen gegossen wird und durch Rotation im beheizten Ofen zu kleinen Bällen rotiert. Der so erzeugte Rohball wird im erwärmten Zustand auf seine endgültige Größe aufgepumpt, hierbei oder hiernach kann ein Ventil eingestoßen werden. Das so erzeugte Halbzeug wird im Tampon-Druckverfahren bedruckt und danach mit einer Klarlackschicht überzogen. Diese Lackschicht veredelt die darunter liegenden Farbschichten in dem es ihnen eine glänzende, und somit edle, Erscheinung verleiht. Das Auftragen der zusätzlichen Lackschicht erhöht jedoch den Herstellungsaufwand der Bälle.

Ebenso bekannt sind so genannte Pearlbälle, bei deren Herstellung so genannte Pearlpigmente (wie zum Beipspiel Osixo Supersilver) einem transparenten Plastisol beigegeben werden, welches den Bällen einen Metallicschimmer verleiht. Durch eine geeignete Pigmentauswahl können diese Pearlbälle mit Metallicschimmer in verschiedenen Farben wie zum Beispiel rot, blau, silber oder gold hergestellt werden. Diese Bälle können des weiteren bedruckt werden, wobei bisher der Druck einfarbig und mit deckenden Farben ausgeführt worden ist. Aus diesem Grund wurde die schimmernde Oberfläche von der deckenden Farbe verdeckt, sodass die Oberfläche des Balles an den bedruckten Stellen die schimmernde Eigenschaft verlor.

Dokument US 4,798,368 A offenbart ein Verfahren gemäß dem Oberbegriff des Anspruchs 1 sowie einen Kunststoffball mit ähnlichen Eigenschaften wie diejenigen des in Anspruch 14 beanspruchten Kunststoffballs.

Vor diesem Hintergrund ist es die Aufgabe der vorliegenden Erfindung, ein Verfahren zur kostengünstigen Herstellung bedruckter Kunststoffbälle bereitzustellen, welche ein veredeltes Erscheinungsbild aufweisen. Eine weitere Aufgabe der Erfindung ist es, Kunststoffbälle bereitzustellen, welche kostengünstig sind und ein edles Erscheinungsbild aufweisen.

Die Aufgabe wird erfindungsgemäß durch ein Verfahren nach Anspruch 1 und einen Kunststoffball nach Anspruch 14 gelöst. Bevorzugte Ausführungsformen werden in den Unteransprüchen beschrieben.

Nach einem ersten Aspekt der Erfindung wird die Erfindungsaufgabe gelöst durch ein Verfahren zum Herstellen von Kunststoffbällen, wobei das Verfahren folgende Schritte umfasst: Herstellung eines Arbeitsgemisches, welches mindestens einen Kunststoff umfasst; Versetzen des Arbeitsgemisches mit Pigmenten, welche einen Glanzeffekt aufweisen; Formen eines Halbzeugs aus dem Arbeitsgemisch; Aufbringen von Farbe auf Bereiche des Halbzeugs, wobei das Verfahren dadurch gekennzeichnet ist, dass in mindestens einem Bereich des Halbzeugs ausschließlich mindestens eine nicht-deckende Farbe aufgebracht wird.

Die unerwartete technische Wirkung des Aufbringens einer nicht-deckenden Farbe auf ein Halbzeug, dessen Material Pigmente enthält, welche einen Glanzeffekt aufweisen, ist, dass durch das Durchschimmern der Pigmente durch die Farbschicht ein Metalliceffekt der Farbe entsteht, welcher dem Ball eine edle Erscheinung verleiht. Dies geschieht ohne die Verwendung von kostenintensiven Metellicfarben.

Eine Farbe soll im Sinne dieser Patentanmeldung als eine nicht-deckende Farbe gelten, wenn diese Farbe bei dem gewählten Druckverfahren und der gewählten Ausführung dieses Druckverfahrens folgende Eigenschaften aufweist: wird eine so genannte Kontrastkarte, deren einer Bereich weiß und ein anderer Bereich schwarz ist, mit einer nicht-deckende Farbe bedruckt, so schimmert die schwarze Farbe der Kontrastkarte durch die bedruckte Farbe hindurch. Schimmert der schwarze Bereich der Kontrastkarte nicht durch die Farbe hindurch, wenn diese Farbe bei dem gewählten Druckverfahren und der gewählten Ausführung dieses Druckverfahrens aufgetragen wird, so soll eine solche Farbe im Sinne der vorliegenden

Patentanmeldung als deckende Farbe verstanden werden.

In einer bevorzugten Ausführungsform bildet die mindestens eine nicht-deckende Farbe in dem mindestens einen Bereich des Halbzeugs eine äußere (insbesondere äußerste) Schicht des Kunststoffballs. Der Ball weist eine edle Erscheinung auf, ohne, dass in diesem Bereich eine zusätzliche Klarlackschicht auf den Ball aufgetragen wird, wodurch die Anzahl der Prozessschritte des Bedruckens und somit die Kosten für den Druck reduziert werden.

Das in dem erfindungsgemäßem Verfahren verwendete Arbeitsgemisch kann einen thermoplastischen Kunststoff und/ oder Stabilisatoren und/ oder Weichmacher umfassen. Die Verwendung von thermoplastischen Kunststoffen zur Herstellung von Kunststoffbällen beruht auf einem etablierten Verfahren, sodass bestehende Anlagen zur Durchführung des erfindungsgemäßen Verfahrens genutzt werden können, was die Kosten bei der Aufnahme der Produktion nach einem erfindungsgemäßen Verfahren reduziert. Durch die Verwendung von Stabilisatoren und/ oder Weichmachern können die Eigenschaften des Kunststoffes wie Lebensdauer, Farbtreue oder Elastizität den Bedürfnisse des Produktes angepasst werden.

In einer weiter vorteilhaften Ausführungsform des erfindungsgemäßen Verfahrens ist das Verfahren dadurch gekennzeichnet, dass der mindestens eine Kunststoff im Arbeitsgemisch bevorzugterweise Polyvinylchlorid ist, als Alternative ist jedoch auch Polyethylen oder Polyurethan denkbar. Die Verwendung von handelsüblichen Kunststoffen erlaubt aufgrund der guten Verfügbarkeit und der Vielzahl im Wettbewerb stehender Anbieter die Kosten für die Erzeugung von Kunststoffbällen nach diesem Verfahren niedrig zu halten.

Ferner kann das erfindungsgemäße Verfahren einen Schritt des Erwärmens des Arbeitsgemisches und/ oder einen Schritt des Erwärmens eines

Zwischenproduktes umfassen. Hierdurch können chemische und/ oder physikalische Reaktionen in dem Arbeitsgemisch oder dem Halbzeug ausgelöst werden, insbesondere kann das Erwärmen die Formbarkeit des Arbeitsgemisches oder des Zwischenproduktes in gewünschter Art und Weise verändern.

Das erfindungsgemäßes Verfahren kann im Schritt des Formens des Halbzeugs ein Aufblasen umfassen. Hierdurch können in besonders einfacher und kostengünstiger Art und Weise die Halbzeuge während ihres Formens mit einem Hohlraum versehen werden und ihre Form kann den Bedürfnissen des Herstellungsprozesses angepasst werden.

Insbesondere kann das erfindungsgemäße Verfahren ein Einbringen eines Ventils in das Halbzeug oder in eine Zwischenform, welche das Arbeitsgemisch auf dem Weg zum fertigen Kunststoffball in dem Verfahren durchläuft, umfassen. Über ein solches Ventil wird gewährleistet, dass der fertige Ball aufgepumpt werden kann.

Bei dem erfindungsgemäßen Verfahren kann das Arbeitsgemisch vor dem Versetzen mit Pigmenten, welche einen Glanzeffekt aufweisen, erhitzt werden. Durch das Erhitzen wird das Arbeitsgemisch zähflüssiger, wodurch sich die Pigmente, mit welchen das Arbeitsgemisch versetzt wird, nicht aufgrund der Schwerkraft in einem unteren Bereich des Arbeitsgemisches in der verarbeiteten Apparatur absetzen können. Hierdurch wird eine einheitliche Durchsetzung des erhitzten Arbeitsgemisches mit den Pigmenten, welche einen Glanzeffekt aufweisen, auch bei längeren Verarbeitungszeiten erreicht.

Vorteilhafterweise ist das in dem erfindungsgemäßen Verfahren verwendete Arbeitsgemisch oder ein hieraus entstehendes Zwischenprodukt in mindestens einem Verfahrensschritt vor dem Versetzen des Arbeitsgemisches mit Pigmenten, welche einen Glanzeffekt aufweisen, durchsichtig. In einem solchen Arbeitsgemisch tragen auch die weiter von der Oberfläche des Arbeitsgemisches entfernten Pigmente, welche einen Glanzeffekt aufweisen, zu einem Glanzeffekt an der Oberfläche des Arbeitsgemischess bei.

Die in der Patentanmeldung beschriebenen Verfahren verwendeten Pigmente, welche einen Glanzeffekt aufweisen, können Effektpigmente, insbesondere Metalleffektpigmente oder Pearlglanzpigmente, enthalten. Die Verwendung von handelsüblichen, leicht zu beschaffenden Effektpigmenten als Pigmente, welche einen Glanzeffekt aufweisen, erlaubt die Verwendung des erfingunsgemäßen Verfahrens ohne eine kostenintensive Entwicklung von speziellen Pigmenten, wodurch die Kosten des Endproduktes, welches nach dem erfindungsgemäßen Verfahren hergestellt wird, gesenkt werden. Zu solchen solchen handelsüblichen Effektpigmenten zählen beispielsweise Metalleffektpigmente oder Pearlglanzpigmente.

Vorteilhafterweise ist das erfindungsgemäße Verfahren dadurch gekennzeichnet, dass in dem mindestens einen Bereich des Halbzeugs, in welchem ausschließlich mindestens eine nicht-deckende Farbe aufgebracht wird, eine Mehrzahl von ausschließlich nicht-deckenden Farben aufgebracht wird. Durch das Aufbringen einer Mehrzahl von ausschließlich nicht-deckenden Farben auf einen gemeinsamen Bereich des Halbzeugs, kann für das Auge des Betrachters ein Farbeffekt erzielt werden, welcher einer Vielzahl von Farben entspricht. So kann beispielsweise aus den drei Primärfarben rot, grün und blau eine sehr große Anzahl an Mischfarben hergestellt werden. Somit ergibt sich die Möglichkeit unter Verwendung weniger Ausgangsfarben eine Vielzahl von Farbeffekten auf dem Kunststoffball darzustellen, was eine kostengünstige Alternative zur Verwendung einer Vielzahl von Farben ist, für deren Aufbringung spezielle, separate Druckschritte notwendig sind.

Ferner kann das erfindungsgemäße Verfahren dadurch gekennzeichnet sein, dass auf das Halbzeug eine Mehrzahl von Farben aufgebracht wird, wobei Bereiche auf der Oberfläche des Halbzeugs existieren, in welchen sich Farben überlappen, und Bereiche auf der Oberfläche des Halbzeugs existieren, in welchen sich Farben nicht überlappen. Hierdurch können, auch vielfarbige, Muster auf der Oberfläche des Halbzeugs entstehen, was dem Ball eine edle Erscheinung verleiht und den Ball für einen Käufer attraktiv gestaltet.

Insbesondere ist das erfindungsgemäße Verfahren dadurch gekennzeichnet, dass mindestens eine Farbe durch ein Tampon-Druckverfahren auf das Halbzeug aufgebracht wird. Das Tampon-Druckverfahren ist im besonderen Maße geeignet unebene und/ oder gekrümmte Oberflächen, wie beispielsweise die von Bällen, in nur wenigen Druckschritten zu bedrucken, wodurch der Aufwand gering gehalten wird, um einen Ball, beispielsweise vollflächig, zu bedrucken.

Das erfindungsgemäße Verfahren kann sich ferner dadurch auszeichnen, dass die Schichtdicke der mindestens einen nicht-deckende Farbe in dem mindestens einen Bereich des Halbzeugs, in welchem ausschließlich nicht-deckende Farbe aufgebracht wird, kleiner ist als 40 µm, bevorzugt kleiner ist als 30 µm, höchst bevorzugt kleiner ist als 20 µm.

Die Verwendung einer Farbschicht deren Schichtdicke kleiner ist als 40 µm reduziert insbesondere die Druckkosten aufgrund des geringen Farbverbrauchs, ist die Schichtdicke kleiner als 30 µm so kann ein verstärktes Durchschimmer der Pigmente, welche einen Glitzereffekt aufweisen, durch eine Farbschicht festgestellt werden. Ist nach einer höchst bevorzugten Ausführungsform die Schichtdicke kleiner als 20 µm, so kann bei einer Bedruckung mit mehreren Farbschichten nicht-deckender Farbe ein verstärktes Durchschimmer der Pigmente, welche einen Glitzereffekt aufweisen, beobachtet werden. All diese Vorteile erlauben es jeder für sich eine besonders edle Erscheinung des Balles zu erreichen.

Nach einem weiteren Aspekt der Erfindung wird die Erfindungsaufgabe durch einen Kunststoffball gelöst, welcher vorzugsweise nach einem der oben beschriebenen Verfahren hergestellt ist und einen Grundkörper umfasst, in welchem Pigmente, welche einen Glanzeffekt aufweisen, eingebettet sind, wobei auf den Grundkörper in mindestens einem Bereich ausschließlich mindestens eine nicht-deckende Farbe aufgebracht ist, und wobei die mindestens eine nicht-deckende Farbe in dem mindestens einen Bereich eine äußere oder äußerste Schicht des Kuststoffballs bildet. Die Pigmente, welche einen Glanzeffekt aufweisen, schimmern in mindestens einem Bereich durch eine nicht-deckende Farbe hindurch, was einen Metalliceffekt der Farbe bewirkt. Hierdurch wird, ohne dass eine äußere Lackschicht auf die nicht-deckende Farbe in dem mindestens einem Bereich aufgebracht wird, ein edles Erscheinungsbild des Balles erreicht.

Die Erfindung wird nachfolgend anhand eines bevorzugten Ausführungsbeispiels unter Bezugnahme auf die beigefügten Zeichnungen näher erläutert. Es zeigen:
- Figur 1a: eine schematische Darstellung einer Befüllung einer Rotationsform mit einem Arbeitsgemisch;
- Figur 1b: eine schematische Darstellung eines Rotationsformens
- Figur 2a: eine schematische Darstellung der Verwendung eines Zwischenproduktes beim Aufblasen in einem ersten Arbeitsschritt;
- Figur 2b: eine schematische Darstellung der Verwendung eines Zwischenproduktes beim Aufblasen in einem zweiten Arbeitsschritt;
- Figur 3a: eine schematische Darstellung eines Druckvorgangs in einem ersten Arbeitsschritt, bei welchem ein Halbzeug bedruckt wird;
- Figur 3b: eine schematische Darstellung eines Druckvorgangs in einem zweiten Arbeitsschritt, bei welchem ein Halbzeug bedruckt wird;

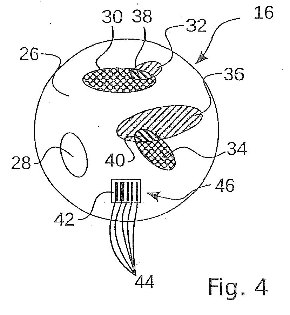

- Figur 4: einen beispielhaften Aufdruck auf ein Halbzeug.

In einer bevorzugten Ausführungsform des Verfahrens wird in einem ersten Schritt ein Arbeitsgemisch 2 angefertigt, welches bevorzugterweise Polyvinylchlorid als ein Kunststoff umfasst und ferner Stabilisatoren und Weichmacher umfassen kann. Als Kunststoff können alternativ ebenso Polyethylen oder Polyurethan Verwendung finden, ebenso denkbar sind auch Mischungen von Kunststoffen, wobei die Kunststoffe in beliebigen geeigneten Formen in das Arbeitsgemisch 2 eingebracht werden können. Hierbei werden bevorzugt thermoplastische Kunststoffe verwendet. Das Arbeitsgemisch 2 wird mit Pigmenten versetzt, welche einen Glanzeffekt aufweisen.

Unter einem Glanzeffekt ist hierbei zu verstehen, dass die Pigmente glitzern und/ oder schimmern und/ oder einen perlenartigen Glanz aufweisen und/ oder einen metallischen Glanz aufweisen und/ oder reflektierende Eigenschaften aufweisen. Insbesondere handelt es sich bei solchen Pigmenten um so genannte Effektpigmente, insbesondere Metalleffektpigmente oder Pearlglanzpigmente (Pearlpigmente). Als Metalleffektpigmente werden beispielsweise plättchenförmige Metallpartikel insbesondere aus Aluminium, Messing oder Kupfer angesehen. Als Pearlglanzpigmente werden plättchenförmige Pigmentpartikel angesehen, welche transparent oder nicht-transparent sein können. Die transparenten Plättchen können eine hohe Brechzahl aufweisen und können durch Mehrfachreflektionen einen perlenähnlichen Effekt erzeugen. Ebenso besteht die Möglichkeit, dass die optischen Eigenschaften der Plättchen durch Interferenzen innerhalb der Plättchen oder durch Interferenzen, welche durch eine Wechselwirkung von Licht mit einer Beschichtung der Plättchen entsteht, bestimmt werden. Die Beschichtungen der Plättchen können Metalloxide umfassen. Zu den Stoffen aus welchen derartige Plättchen hergestellt werden können gehört unter anderem Graphit, Molybdänsufid, Glimmer, Eisenoxidschwarz, Eisentitanat, Eisen(III)-Oxid, Aluminiumoxid, Titanoxid, Bismutoxidchlorid, Borosilikat sowie Siliziumoxid.

In einer besonders vorteilhaften Ausführungsform des Verfahrens wird das Arbeitsgemisch 2 mit Pearlglanzpigmenten (Pearlpigmenten), wie zum Beipspiel Osixo Supersilver, versetzt. In einer höchst vorteilhaften Ausführungsform des Verfahrens wird ein Arbeitsgemisch 2, welches Polyvinylchlorid als ein Kunststoff umfasst, mit Pearlglanzpigmenten (Pearlpigmenten), wie zum Beipspiel Osixo Supersilver, versetzt.

Weiterhin können dem Arbeitsgemisch 2 Pigmente zugefügt werden, welche keinen Glanzeffekt aufweisen. Ebenso kann das Arbeitsgemisch 2 mit Farbstoffen versetzt werden. Um Pigmente oder Farbstoffe vor schädlichen Umwelteinflüssen zu schützen, können weiterhin Schutzstoffe in das Arbeitsgemisch 2 eingebracht werden, welche beispielsweise ungewollte chemische Reaktionen wie zum Beispiel Oxidation verhindern.

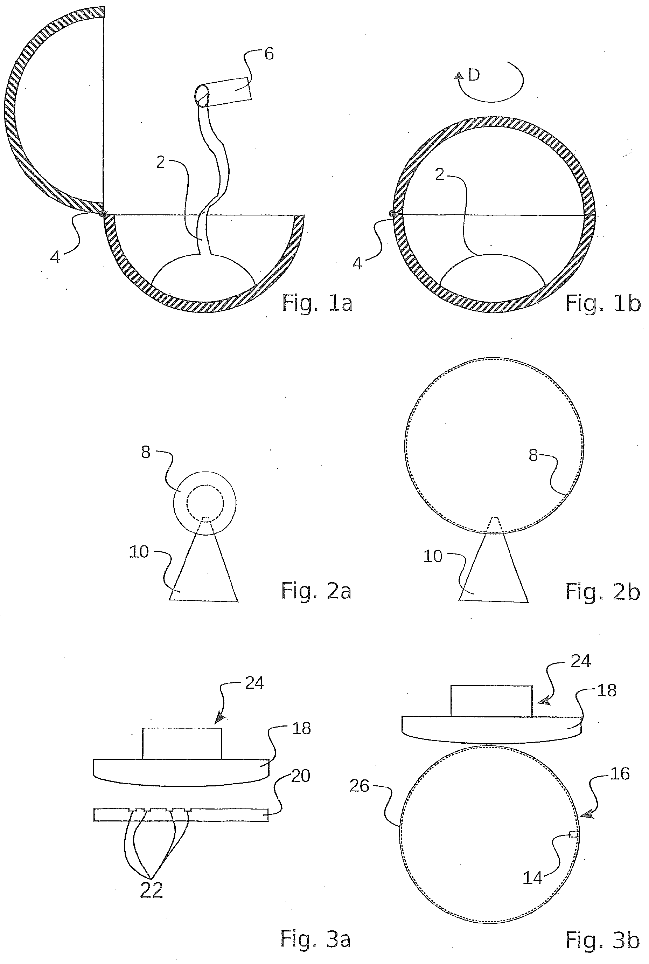

Es besteht die Möglichkeit, dass das Arbeitsgemisch 2 vor dem Versetzen mit Pigmenten, welche einen Glanzeffekt aufweisen, erhitzt wird. Es ist vorteilhaft, wenn das Arbeitsgemisch 2 oder ein hieraus entstehendes Zwischenprodukt, welches beispielsweise durch Erhitzen entsteht, vor dem Versetzen des Arbeitsgemisches 2 mit Pigmenten, welche einen Glanzeffekt aufweisen, durchsichtig ist. Die Durchsichtigkeit bzw. Transparenz des Materials des Arbeitsgemisches 2 ermöglicht es, dass Effektpigmente aus tieferen Schichten des Materials eine optische Wirkung entfalten können. Diese optische Wirkung kann sich auch bei leicht milchigen und/ oder leicht getrübten und/ oder durchsichtig eingefärbten Arbeitsgemischen 2 und/ oder Zwischenprodukten entfalten. Vorteilhafterweise reift das Arbeitsgemisch 2, welches als eine Art Paste vorliegt, eine gewisse Zeit, beispielsweise 24 Stunden, bevor es weiterverarbeitet wird. Das Arbeitsgemisch 2 wird in einem weiteren Abschnitt des Verfahrens zu einem Halbzeug 16 geformt. Hierbei kann wie in Figur 1a schematisch dargestellt ein mit Pigmenten, welche einen Glanzeffekt aufweisen, versetztes Arbeitsgemisch 2 in eine geöffnete Rotationsform 4 aus einer Zuleitung 6 eingeführt werden. Bei dem Arbeitsgemisch 2 kann es sich um Plastisol handeln. Die Rotationsform 4 wird geschlossen und wie in Fig. 1b angedeutet in einem beheizten Ofen in Rotation versetzt, angedeutet durch Drehrichtung D, sodass sich Rohbälle 8 formen, deren Durchmesser kleiner sein kann, als der Durchmesser des fertigen Kunststoffballes. Es ist ebenso möglich, dass die Rotationsform 4 mehrere beheizte Öfen durchläuft, wobei sie in jedem der Öfen in Rotation versetzt werden kann, die Öfen können sich durch die darin vorherrschende Temperatur unterscheiden. Es ist aber ebenso möglich, dass in einem Ofen die Rotationsform 4 unterschiedlichen Temperaturen ausgesetzt wird, wobei sie hierbei rotieren kann. In einem Temperaturschritt kann die Rotationsform 4 und das darin enthaltene Arbeitsgemisch 2 soweit erhitzt werden, dass das Arbeitsgemisch 2 sich gut in der Rotationsform 4 verteilt. In einem weiteren Temperaturschritt kann die Rotationsform 4 das Arbeitsgemisch 2 auf eine Temperatur gebracht werden, sodass das Arbeitsgemisch 2 zu gelieren anfängt. In einem anderen Temperaturschritt kann die Temperatur der Rotationsform 4 und des Arbeitsgemisches 2 abgesenkt werden, sodass hiernach der Rohball 8 entnommen werden kann. In dem Fall, dass der Rohball 8 hohl ist, kann seine Wandstärke wesentlich dicker sein, als die Wandstärke eines fertigen Kunststoffballes. In einem solchen Verfahren wird bevorzugt ein thermoplastischer Kunststoff als Teil des Arbeitsgemisches 2 verwendet.

In einem nächsten Schritt kann der Rohball 8 wie in Figur 2a und 2b schematisch dargestellt, durch Aufblasen in eine Gestalt gebracht werden, welche im Wesentlichen die Gestalt des fertigen Kunststoffballes ist. Hierzu wird der Rohball 8 (Zwischenprodukt), in diesem Beispiel hohl dargestellt, welcher eine erhöhte Temperatur aus einem vorhergehenden Arbeitsschritt aufweist oder in einem separatem Arbeitsschritt erhitzt wurde, auf einen Dorn 10 eines Pumpkarusells (nicht dargestellt) aufgebracht, welcher eine Öffnung zum Einbringen eines Fluids (nicht dargestellt) in den Rohball 8 aufweist.

Weist der Rohball 8 aufgrund seiner Temperatur eine hinreichend starke nicht-reversible Verformbarkeit auf, so kann der Rohball 8 auf eine Größe aufgepumpt werden, die kleiner ist als die Größe des fertigen Kunststoffballes, sodass der Rohball 8 aufgrund des Überdruckes, welcher in ihm herrscht, erst mit der Zeit die endgültige Größe annimmt. Vorzugsweise wird nach dem Aufblasen ein Ventil 14 in die Haut des Rohballs 18 eingestoßen.

Es ist ebenso denkbar, anstelle eines Domes 10 den Rohball 8 auf eine Düse aufzusetzen, welche das Fluid in den Rohball 8 (Zwischenform) einbringt. Dieses so erstellte Halbzeug 16 wird, vorzugsweise im Tampon-Druckverfahren wie in Figur 3a und Figur 3b schematisch dargestellt, farblich bedruckt. Hierbei wird der Tampon 18 einer Tampon-Druckmaschine auf ein Klischee 20 aufgedrückt, um Farbe aus Rillen 22 aufzunehmen, welche sich in dem Klischee 20 befinden und mit Farbe gefüllt sind. Der Tampon 18 wird mittels einer Transportvorrichtung 24 auf eine Oberfläche 26 des fertig erstellten Halbzeugs 16 aufgebracht, wodurch die vom Klischee 20 aufgenommene Farbe durch den Tampon 18 auf die Oberfläche 26 übertragen wird. Hierbei wird in mindestens einem Bereich 28, 32, 36 des Halbzeugs ausschließlich mindestens eine nicht-deckende Farbe aufgebracht. An dieser Stelle schimmern die Pigmente, mit welchen das Arbeitsgemisch 2 versetzt worden ist und welche einen Glanzeffekt aufweisen, durch die nicht-deckende Farbe hindurch, wodurch der Ball eine edle Erscheinung erhält. Ein solcher Bereich 28, 32, 36 des Halbzeugs in welchem ausschließlich mindestens eine nicht-deckende Farbe aufgebracht wird, kann sich über die gesamte Oberfläche 26 des fertigen Halbzeugs 16 erstrecken.

Auf der Oberfläche 26 des Halbzeugs 16 entstehen während des Druckvorgangs Bereiche 28, in welchen ausschließlich nicht-deckende Farben aufgetragen werden. Hierbei können sich mehrere nicht-deckende Farbschichten überlagern, wodurch aus einem Satz von Ausgangsfarben eine gewünschte Mischfarbe für den Betrachter entsteht. Weiterhin können während des Druckvorganges Bereiche 30 entstehen, in denen deckende Farben auf die Oberfläche 26 des Halbzeugs 16 aufgetragen werden. Diese Bereiche werden im folgenden Transparenzbereiche 28, 32, 36 für Bereiche in denen nicht-deckende Farben aufgetragen sind, und Deckbereiche 30, 34, 42, 44 für Bereiche in denen deckende Farben aufgetragen sind, genannt. Diese Bereiche, können sich überlagern, sodass ein Transparenzbereich (welcher der Form nach dem Transparenzbereich 32 und einem Überlagerungsbereich 38 entspricht) ein Deckbereich (welcher der Form nach dem Deckbereich 30 und dem Überlagerungsbereich 38 entspricht) zumindest teilweise überlagert, wodurch in dem Überlagerungsberech 38 der Metalliceffekt unterbunden wird, der Lasureffekt, also das Durchscheinen der unteren Farbschicht, der nicht-deckenden Farben jedoch erhalten bleibt. Überlagert ein Deckbereich (welcher der Form nach dem Deckbereich 34 und einem Überlagerungsbereich 40 entspricht) zumindest teilweise einen Transparenzbereich (welcher der Form nach dem Transparenzbereich 36 und dem Überlagerungsbereich 40 entspricht), so tritt im Überlagerungsbereich 40 bevorzugt nur die Farbeigenschaft der deckenden Farbe auf. Die Deckbereiche 42 können von anderen Deckbereichen 44 überlagert sein, um beispielsweise einen Strichcode 46 auf den Ball aufzubringen, wobei der Deckbereich 42 vorzugsweise eine helle Farbe aufweist und die Deckbereiche 44 vorzugsweise eine dunkle Farbe aufweisen.

Durch die Überlagerung von Deckungsbereichen und Transparenzbereichen ist es nun möglich, Muster, Abbildung und Schriftzüge auf die Oberfläche 26 des Halbzeugs 16 aufzubringen, welche eine Vielzahl von optischen Effekten aufweisen können und dadurch einem Kunststoffball ein verstärkt edles Erscheinungsbild verleihen. Bereiche, in welchen ein starker Glitzereffekt erwünscht ist, werden bevorzugt nicht bedruckt, sodass die optische Erscheinung des Grundkörpers des Balles zum Tragen kommt oder werden von einer oder von wenigen nicht-deckenden Farben bedeckt. Vorzugsweise werden nur Farben auf die Oberfläche 26 des Halbzeugs 16 aufgetragen und bilden somit eine äußere Schicht des Kunststoffballes, wobei im mindestens einem Bereich 28, 32, 36 ausschließlich mindestens eine nicht-deckende Farbe aufgebracht ist, wodurch dem Ball ohne Verwendung einer Klarlackschicht ein edles Erscheinungsbild verliehen wird. Die Schichtdicke der mindestens einen nicht-deckenden Farbe in mindestens einem Bereich 28, 32, 36 des Halbzeugs 16, in welchem ausschließlich nicht-deckende Farbe aufgebracht wird, kann kleiner sein als 40 µm, bevorzugt kleiner sein als 30 µm, höchst bevorzugt kleiner sein als 20 µm, sodass der Glitzereffekt, welchen das Halbzeug 16 aufweist, durch die nicht-deckende Farbschicht hinreichend stark sichtbar ist. Ein so aus dem Halbzeug 16 erzeugter Kunststoffball kann nach einer Trocknungsphase für den Versand vorbereitet werden. Ein solcher Ball umfasst einen Grundkörper, in welchem Pigmente, welche einen Glanzeffekt aufweisen, eingebettet sind. Diese Pigmente schimmern in mindestens einem Bereich in welchem ausschließlich mindestens eine nicht-deckende Farbe aufgebracht ist, hindurch. In mindestens einem Bereich bildet diese nicht-deckende Farbe eine äußere, insbesondere äußerste, Schicht des. Kunststoffballs. Eine weitere Veredelung ist nicht notwendig, da die Pigmente in mindestens einem Bereich durch eine nicht-deckende Farbe hindurch schimmern und somit dem Ball von vorneherein ein edles Erscheinungsbild verleihen.

Es besteht die Möglichkeit, dass das Grundmaterial des Grundkörpers des Kunststoffballs, abgesehen von den darin eingebrachte Pigmenten, durchsichtig bzw. transparent ist. Hierbei sollen auch leicht milchige und/ oder leicht getrübte und/ oder durchsichtig eingefärbte Grundmaterialien als durchsichtig bzw. transparent angesehen werden. Die Durchsichtigkeit bzw. Transparenz des Grundmaterials ermöglicht es, dass Effektpigmente aus tieferen Schichten des Grundmaterials eine optische Wirkung entfalten können.

Es ist anzumerken, dass für die Erstellung des Halbzeugs 16 eine Vielzahl geeigneter Herstellungsverfahren möglich sind. So kann beispielsweise das Halbzeug 16 entweder ausschließlich durch Rotationsformen oder ausschließlich durch Blasformen hergestellt werden. Weiterhin ist beispielsweise ein Blasformen ohne eine äußere Form denkbar. Ebenso ist es bei dem Verfahren möglich, dass das Arbeitsgemisch 2 eine Suspension ist, in welcher Formen eingetaucht werden, und das Halbzeug 16 durch ein Trockenen, Aushärten, oder durch eine chemische Reaktion gebildet wird.

Soll der fertige Kunststoffball ein Ventil 14 aufweisen, so kann dieses nicht nur nach dem Aufblasen des Rohballes 8 in das Material des sich in Verarbeitung befindenden Rohballes 8 (Zwischenform) eingebracht werden, es ist ebenso möglich das Einbringen des Ventil 14 in einem geeigneten späteren oder früheren Verfahrensschritt auszuführen bei welchem beispielsweise das Ventil 14 in eine Haut des Halbzeuges 16 oder des Kunststoffballes eingestoßen wird.

## Patentansprüche

1. Verfahren zum Herstellen von Kunststoffbällen, wobei das Verfahren folgende Schritte umfasst:
Herstellung eines Arbeitsgemisches (2), welches mindestens einen Kunststoff umfasst;
Versetzen des Arbeitsgemisches (2) mit Pigmenten , welche einen Glanzeffekt aufweisen;
Formen eines Halbzeugs (16) aus dem Arbeitsgemisch (2);
Aufbringen von Farbe auf Bereiche (28, 30, 32, 34, 36, 38, 40, 42, 44) des Halbzeugs (16);
wobei das Verfahren **dadurch gekennzeichnet ist, dass**
in mindestens einem Bereich (28, 32, 36) des Halbzeugs (16) ausschließlich mindestens eine nicht-deckende Farbe aufgebracht wird.

2. Verfahren nach Anspruch 1, ferner **dadurch gekennzeichnet, dass** die mindestens eine nicht-deckende Farbe in dem mindestens einen Bereich (28, 32, 36) des Halbzeugs (16) eine äußere Schicht des Kunststoffballs bildet.

3. Verfahren nach Anspruch 1 oder 2, ferner **dadurch gekennzeichnet, dass** das Arbeitsgemisch (2) ein thermoplastischen Kunststoff und/ oder Stabilisatoren und/ oder Weichmacher umfasst.

4. Verfahren nach einem der vorhergehenden Ansprüche, ferner **dadurch gekennzeichnet, dass** der mindestens eine Kunststoff im Arbeitsgemisch (2) Polyvinylchlorid oder Polytethylen oder Polyurethan ist.

5. Verfahren nach einem der vorhergehenden Ansprüche, ferner **dadurch gekennzeichnet, dass** das Verfahren einen Schritt des Erwärmens des Arbeitsgemisches (2) und/ oder einen Schritt des Erwärmens eines Zwischenproduktes (8) umfasst.

6. Verfahren nach einem der vorhergehenden Ansprüche, ferner **dadurch gekennzeichnet, dass** das Formen des Halbzeugs (16) ein Aufblasen umfasst.

7. Verfahren nach einem der vorhergehenden Ansprüche, ferner **dadurch gekennzeichnet, dass** das Verfahren ein Einbringen eines Ventils (14) in das Halbzeug (16) oder in eine Zwischenform, welche das Arbeitsgemisch (2) auf dem Weg zum fertigen Kunststoffball in dem Verfahren durchläuft, umfasst.

8. Verfahren nach einem der vorhergehenden Ansprüche, ferner **dadurch gekennzeichnet, dass** das Arbeitsgemisch (2) oder ein hieraus entstehendes Zwischenprodukt in mindestens einem Verfahrensschritt vor dem Versetzen des Arbeitsgemisches (2) mit Pigmenten, welche einen Glanzeffekt aufweisen, durchsichtig ist.

9. Verfahren nach einem der vorhergehenden Ansprüche, ferner **dadurch gekennzeichnet, dass** die Pigmente, welche einen Glanzeffekt aufweisen, Effektpigmente, insbesondere Metalleffektpigmente oder Perlglanzpigmente enthalten.

10. Verfahren nach einem der vorhergehenden Ansprüche, ferner **dadurch gekennzeichnet, dass** in dem mindestens einen Bereich (28, 32, 36) des Halbzeugs (16), in welchem ausschließlich mindestens eine nicht-deckende Farbe aufgebracht wird, eine Mehrzahl von ausschließlich nicht-deckenden Farben aufgebracht wird.

11. Verfahren nach einem der vorhergehenden Ansprüche, ferner **dadurch gekennzeichnet, dass** auf das Halbzeug (16) eine Mehrzahl von Farben aufgebracht wird, wobei Bereiche (38, 40, 44) auf der Oberfläche (26) des Halbzeugs (16) existieren, in welchen sich Farben überlappen, und Bereiche (28, 30, 32, 34, 36) auf der Oberfläche (26) des Halbzeugs (16) existieren existieren, in welchen sich Farben nicht überlappen.

12. Verfahren nach einem der vorhergehenden Ansprüche, ferner **dadurch gekennzeichnet, dass** mindestens eine Farbe durch ein Tampon-Druckverfahren auf das Halbzeug (16) aufgebracht wird.

13. Verfahren nach einem der vorhergehenden Ansprüche, ferner **dadurch gekennzeichnet, dass** die Schichtdicke der mindestens einen nicht-deckenden Farbe in dem mindestens einen Bereich (28, 32, 36) des Halbzeugs (16), in welchem ausschließlich nicht-deckende Farbe aufgebracht wird, kleiner ist als 40 µm, bevorzugt kleiner ist als 30 µm, höchst bevorzugt kleiner ist als 20 µm.

14. Kunststoffball, vorzugsweise hergestellt nach einem der Ansprüche 1 bis 13, umfassend einen Grundkörper, in welchem Pigmente, welche einen Glanzeffekt aufweisen, eingebettet sind, wobei auf den Grundkörper in mindestens einem Bereich ausschließlich mindestens eine nicht-deckende Farbe aufgebracht ist, und wobei die mindestens eine nicht-deckende Farbe in dem mindestens einen Bereich eine äußere Schicht des Kunststoffballs bildet.

## Claims

1. Method for manufacturing plastic balls, wherein the method comprises the following steps:
production of a working mixture (2) comprising at least one plastic material;
addition of pigments having a gloss effect to the working mixture (2);
shaping a semi-finished product (16) from the working mixture (2);
application of colours to areas (28, 30, 32, 34, 36, 38, 40, 42, 44) of the semi-finished product (16);
wherein the method **is characterized in that**
in at least one area (28, 32, 36) of the semi-finished product (16) exclusively at least one transparent colour is applied.

2. Method according to claim 1, furthermore **characterized in that** the at least one transparent colour forms an outer layer of the plastic ball in the at least one area (28, 32, 36) of the semi-finished product (16).

3. Method according to claim 1 or 2, furthermore **characterized in that** the working mixture (2) comprises a thermoplastic plastic and/or stabilizers and/or plasticizers.

4. Method according to one of the preceding claims, furthermore **characterized in that** the at least one plastic material in the working mixture (2) is polyvinylchloride or polyethylene or polyurethane.

5. Method according to one of the preceding claims, furthermore **characterized in that** the method comprises a step of heating the working mixture (2) and/or a step of heating an intermediate product (8).

6. Method according to one of the preceding claims, furthermore **characterized in that** the shaping of the semi-finished product (16) comprises inflating.

7. Method according to one of the preceding claims, furthermore **characterized in that** the method comprises inserting a valve (14) into the semi-finished product (16) or into a transitional form which the working mixture (2) goes through during the procedure before it becomes the finished plastic ball.

8. Method according to one of the preceding claims, furthermore **characterized in that** the working mixture (2) or a resulting intermediate product is transparent during at least one step of the procedure before pigments having a gloss effect are added to the working mixture (2).

9. Method according to one of the preceding claims, furthermore **characterized in that** the pigments having a gloss effect comprise effect pigments, in particular metallic effect pigments or pearl gloss pigments.

10. Method according to one of the preceding claims, furthermore **characterized in that** in the at least one area (28, 32, 36) of the semi-finished product (16) in which exclusively at least one transparent colour is applied a plurality of exclusively transparent colours is applied.

11. Method according to one of the preceding claims, furthermore **characterized in that** a plurality of colours is applied to the semi-finished product (16), wherein there are areas (38, 40, 44) on the surface (26) of the semi-finished product (16) where colours overlap and wherein there are areas (28, 30, 32, 34, 36) on the surface (26) of the semi-finished product (16) where colours do not overlap.

12. Method according to one of the preceding claims, furthermore **characterized in that** at least one colour is applied to the semi-finished product (16) by a tampon printing method.

13. Method according to one of the preceding claims, furthermore **characterized in that** the layer thickness of the at least one transparent colour in the at least one area (28, 32, 36) of the semi-finished product (16) where exclusively transparent colour is applied, is smaller than 40 µm, preferably smaller than 30 µm and mostly preferred smaller than 20 µm.

14. Plastic ball, preferably manufactured according to one of claims 1 to 13, comprising a basic body, in which pigments having a gloss effect are embedded, wherein exclusively at least one transparent colour is applied to the basic body in at least one area and wherein the at least one transparent colour forms an outer layer of the plastic ball in the at least one area.

## Revendications

1. Procédé pour la fabrication de balles en matière plastique, le procédé comprenant les étapes suivantes:
production d'un mélange de travail (2) comprenant au moins une matière plastique;
l'addition de pigments ayant un effet brillant au mélange de travail (2);
façonner un produit semi-fini (16) du mélange de travail (2);
appliquer de la couleur sur des régions (28, 30, 32, 34, 36, 38, 40, 42, 44) du produit semi-fini (16);
le procédé étant **caractérisé en ce que**
dans au moins une région (28, 32, 36) du produit semi-fini (16) exclusivement au moins une couleur transparente est appliquée.

2. Procédé selon la revendication 1, **caractérisé en outre en ce que** ladite au moins une couleur transparente forme dans ladite au moins une région (28, 32, 36) du produit semi-fini (16) une couche extérieure de la balle en matière plastique.

3. Procédé selon les revendications 1 ou 2, **caractérisé en outre en ce que** le mélange de travail (2) comprend une matière synthétique thermoplastique et/ou des stabilisateurs et/ou des plastifiants.

4. Procédé selon une des revendications précédentes, **caractérisé en outre en ce que** ladite au moins une matière synthétique dans le mélange de travail (2) est du chlorure de polyvinyle ou du polyéthylène ou du polyuréthane.

5. Procédé selon une des revendications précédentes, **caractérisé en outre en ce que** le procédé comprend une étape de chauffer le mélange de travail (2) et/ou une étape de chauffer un produit intermédiaire (8).

6. Procédé selon une des revendications précédentes, **caractérisé en outre en ce que** le façonnage du produit semi-fini (16) comprend un gonflage.

7. Procédé selon une des revendications précédentes, **caractérisé en outre en ce que** le procédé comprend une insertion d'une valve (14) dans le produit semi-fini (16) ou dans une forme intermédiaire du mélange de travail (2) pendant le procédé qui mène à la balle en matière plastique finie.

8. Procédé selon une des revendications précédentes, **caractérisé en outre en ce que** le mélange de travail (2), ou un produit intermédiaire qui en résulte, est transparent pendant au moins une étape du procédé avant l'addition au mélange de travail (2) de pigments ayant un effet brillant.

9. Procédé selon une des revendications précédentes, **caractérisé en outre en ce que** les pigments ayant un effet brillant comprennent des pigments à effets, en particulier des pigments métalliques ou des pigments à effets nacrés.

10. Procédé selon une des revendications précédentes, **caractérisé en outre en ce que** dans ladite au moins une région (28, 32, 36) du produit semi-fini (16) où exclusivement au moins une couleur transparente est appliquée, une pluralité de couleurs exclusivement transparentes est appliquée.

11. Procédé selon une des revendications précédentes, **caractérisé en outre en ce qu'**une pluralité de couleurs est appliquée sur le produit semi-fini (16), et **en ce qu'**il y a des régions (38, 40, 44) sur la surface (26) du produit semi-fini (16) où des couleurs se chevauchent et **en ce qu'**il y a des régions (28, 30, 32, 34, 36) sur la surface (26) du produit semi-fini (16) où des couleurs ne se chevauchent pas.

12. Procédé selon une des revendications précédentes, **caractérisé en outre en ce qu'**au moins une couleur est appliquée sur le produit semi-fini (16) par un procédé à impression tampon.

13. Procédé selon une des revendications précédentes, **caractérisé en outre en ce que** l'épaisseur de couche de ladite au moins une couleur transparente dans ladite au moins une région (28, 32, 36) du produit semi-fini (16) où exclusivement de la couleur transparente est appliquée, est plus petite que 40 µm, de préférence plus petite que 30 µm et de la façon la plus préférée plus petite que 20 µm.

14. Balle en matière plastique, de préférence fabriquée selon une des revendications 1 à 13, comprenant un corps de base, dans lequel des pigments ayant un effet brillant sont intégrés, où exclusivement au moins une couleur transparente est appliquée sur le corps de base dans au moins une région et où ladite au moins une couleur transparente forme une couche extérieure de la balle en matière plastique dans ladite au moins une région.
